(19) Europäisches Patentamt
European Patent Office
Office européen des brevets

(11) **EP 2 378 145 A2**

(12) **EUROPÄISCHE PATENTANMELDUNG**

(43) Veröffentlichungstag:
**19.10.2011 Patentblatt 2011/42**

(51) Int Cl.:
*F16C 29/04* *(2006.01)* *G01M 13/04* *(2006.01)*

(21) Anmeldenummer: **11161089.5**

(22) Anmeldetag: **05.04.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.04.2010 DE 102010015208**

(71) Anmelder: **Schaeffler Technologies GmbH & Co. KG**
**91074 Herzogenaurach (DE)**

(72) Erfinder:
• **Glück, Stefan**
**97424, Schweinfurt (DE)**
• **Benkert, Frank**
**97534, Waigolshausen (DE)**

(54) **Verfahren zur Überwachung einer Linearführung**

(57) Die Erfindung betrifft ein Verfahren zur Überwachung einer Linearführung mit einem auf einem aus auf Laufbahnen abwälzenden Wälzkörpern gebildeten Wälzkontakt entlang einer Schiene verlagerbaren Wagen mit einer Sensoreinrichtung zur Erfassung eines Schädigungszustands des Wälzkontakts. Um eine einfache und auch für kleine Recheneinheiten in kurzen Zeiten und mittels kostengünstiger Sensoreinrichtungen ausführbare Schädigungsüberwachung vorzusehen, wird mittels der Sensoreinrichtung ein Schwingungszeitsignal erfasst, aus dem Schwingungszeitsignal eine Hüllkurvendemodulation (4) des Schwingungszeitsignals durchgeführt und eine daraus resultierende Größe nach einer Gleichanteilsbestimmung als mit dem Schädigungszustand ansteigender Kennwert (9) ermittelt und bei einem Überschreiten des Kennwerts über einen vorgegebenen Schwellwert auf einen Schädigungszustand erkannt.

EP 2 378 145 A2

## Beschreibung

### Gebiet der Erfindung

Verfahren zur Überwachung einer Linearführung mit einem auf einem aus auf Laufbahnen abwälzenden Wälzkörpern gebildeten Wälzkontakt entlang einer Schiene verlagerbaren Wagen mit einer Sensoreinrichtung zur Erfassung eines Schädigungszustands des Wälzkontakts.

### Hintergrund der Erfindung

Linearführungen dienen der Führung eines Wagens entlang einer Schiene, beispielsweise einer Profilschiene. Zur Ausbildung des Führungskontakts zwischen der Schiene und dem Wagen werden Gleit- und Wälzkontakte eingesetzt. Besonders günstig sind infolge der Wandlung einer Gleit- in eine Rollreibung Wälzkontakte. Dabei werden Wälzkörper entweder stationär oder umlaufend zwischen der Profilschiene und dem Wagen angeordnet. Beispielsweise sind aus der DE 41 40 042 A1 Rollenumlaufeinheiten für eine Linearführung bekannt. Linearführungen werden insbesondere in Werkzeugmaschinen eingesetzt, wobei deren Wälzkontakt zwischen den Wälzkörpern und den zugehörigen Laufbahnen starken Belastungen ausgesetzt sind, die Schädigungen wie Pittings, Abschälungen und dergleichen zur Folge haben können, die - sofern sie nicht rechtzeitig erkannt werden - zum Ausfall der Linearführung und damit der Werkzeugmaschine mit dieser führen können.

Aus der DE 11 2005 002 077 T5 ist in Anlehnung an Überwachungseinrichtungen von Rotativlagern eine Zustandserfassungseinrichtung für eine Linearführung bekannt, die auf Basis einer Erfassung von elastisch auftretenden Schwingungswellen mehrere Parameter bildet, die zu der Beurteilung einer Schädigung der Linearführung herangezogen werden. Infolge der Komplexität der algorithmischen Berechnungs- und Auswertevorgänge muss die Zustandserfassungseinrichtung für die zeitnahe Verwendung der ermittelten Parameter auf vergleichsweise großen Recheneinheiten wie Mikrocomputern mit Mikroprozessoren zurückgreifen, die kostenaufwendig und bauraumintensiv sind. Weiterhin ist bei Verwendung einer für diese Art von Zustandserfassungseinrichtungen üblichen Auswertung breiter und insbesondere hoher Frequenzbänder im Bereich von größer 100 kHz ein Sensor für die Erfassung von Schallemissionen nötig, der entsprechend aufwendig und teuer ist.

### Aufgabe der Erfindung

Aufgabe der Erfindung ist die vorteilhafte Weiterbildung eines Verfahrens zur Überwachung eines Schädigungszustands des Wälzkontakts zwischen den Wälzkörpern und deren Laufflächen einer Linearführung insbesondere vor dem Hintergrund einer einfachen und kostengünstigen Umsetzung des Verfahrens mittels einfacher Komponenten.

### Beschreibung der Erfindung

Die Aufgabe wird durch ein Verfahren zur Überwachung einer Linearführung mit einem auf einem aus auf Laufbahnen abwälzenden Wälzkörpern gebildeten Wälzkontakt entlang einer Schiene verlagerbaren Wagen mit einer Sensoreinrichtung zur Erfassung eines Schädigungszustands des Wälzkontakts gelöst, wobei mittels der Sensoreinrichtung ein Schwingungszeitsignal erfasst wird, aus dem Schwingungszeitsignal eine Hüllkurvendemodulation des Schwingungszeitsignals durchgeführt und eine daraus resultierende Größe nach einer Gleichanteilsbestimmung als mit dem Schädigungszustand ansteigender Kennwert ermittelt wird und bei einem Überschreiten des Kennwerts über einen vorgegebenen Schwellwert ein Schädigungszustand erkannt wird.

Mittels des vorgeschlagenen Verfahrens können alle Formen von Linearführungen mit geschmiertem Wälzkontakt, insbesondere als Kugelumlaufeinheiten ausgebildete Linearführungen auf einen Schädigungszustand des Wälzkontakts überwacht werden. Zur konstruktiven Ausführung von Linearführungen wird auf bekannte Ausführungsformen, wie sie beispielweise in der DE 11 2005 002 077 T5 und DE 41 40 042 A1 offenbart sind, verwiesen.

Als Maßnahmen bei Überschreitung des vorgegebenen Schwellwerts kann ein einstufig oder mehrstufig vorgesehenes Warn- oder Alarmsignal für das Bedien- oder Wartungspersonal ausgegeben werden. Als letzte Stufe eines mehrstufigen Warnsignals kann zur Verhinderung einer Schädigung des Linearantriebs die Linearführung stillgelegt werden, indem beispielsweise ein Antrieb wie Elektromotor oder dergleichen dieser, beispielsweise des auf der Profilschiene linear verlagerbaren Wagens, in eine Steuerroutine der Ermittlung, Erfassung und Auswertung des Signalzeitverlaufs einbezogen wird. Der vorgegebene Schwellwert kann einstufig oder mehrstufig ausgebildet sein und beispielsweise auf die jeweilige Ausführungsform der Linearführung mit ihren spezifischen Schwingungs- und Schallentwicklungen im ungeschädigten und geschädigten Zustand abgestimmt werden.

Gemäß dem erfinderischen Gedanken kann zur Begrenzung des Frequenzbands und damit des zu verarbeitenden Datenaufkommens vor der Hüllkurvendemodulation mittels eines Tiefpassfilters begrenzt werden. Es hat sich dabei überraschenderweise gezeigt, dass unter Verwendung des vorgeschlagenen Verfahrens Frequenzbereiche genutzt werden können, die in Linearführungen bisher als nicht selektive Bereiche für Schädigungen des Wälzkontaktes ausgeblendet wurden. Beispielsweise werden nach dem erfinderischen Gedanken Frequenzbereiche vorgesehen, die eine Bandbreite des Schwingungszeitsignals auf 16 kHz, vorzugsweise 14 kHz begrenzt werden. Durch die Verwendung derartig kleiner Frequenzbereiche können Sensoren, beispielsweise piezoelektrische Sensoren zur Erfassung der Schwingungszeitsignale verwendet werden, die kostengünstig zu Verfügung stehen und gegebenenfalls beispielsweise mittels Mikrosystemtechnik ausreichend miniaturisierbar sind. Durch die Beschränkung auf Frequenzbereiche kleiner 16 kHz wird daher zum Einen die Signalerfassung und zum anderen die Sensoreinrichtung wesentlich vereinfacht.

Gemäß einem vorteilhaften Ausführungsbeispiel kann die Hüllkurvenmodulation in einfacher Weise mittels einer Absolutwertbildung erfolgen, der jeweils ein Tiefpassfilter vor- und nachgeschaltet wird. Hierbei kann durch den vorgeschalteten Tiefpassfilter eine weitere Einschränkung des Frequenzbereichs auf Grenzfrequenzen kleiner 5 kHz, vorzugsweise 3,5 kHz erfolgen. Der nachgeschaltete Tiefpassfilter kann für Grenzfrequenzen im Wesentlichen größer 24 kHz sperrend wirken. Die aus der Hüllkurvendemodulation gewonnene Grö-βe kann prinzipiell bereits als Kennwert für eine Schädigung des Wälzkontakts herangezogen werden. Es hat sich jedoch gezeigt, dass diese Größe beispielsweise infolge von Fremdschwingungen, die durch die vorgelagerten Filtervorgänge nicht eliminierbar sind, da sie im zu beobachtenden und auszuwertenden niedrigen Frequenzbereich liegen, relativ unzuverlässig ist. Nach dem erfinderischen Gedanken wird daher diese Größe nach der Hüllkurvendemodulation einer zusätzlichen Prozedur zur Bildung des Gleichanteils der Grö-βe unterworfen, die die genannten Fremdschwingungen in ausreichender Weise eliminiert, so dass die nach der Bildung des Gleichanteils zur Verfügung stehende Größe als Kennwert mit ausreichender Genauigkeit zur Verfügung steht.

Bei den Tiefpassfiltern handelt es sich bevorzugt um eine einfache Filterung, beispielsweise mittels eines analog oder digital darstellbaren Bessel-Filters, das bevorzugt höherer Ordnung, beispielsweise fünfter Ordnung sein kann, so dass der Aufbau der Sensoreinrichtung einfach und mittels eines einfachen Mikroprozessors erfolgen kann.

Es hat sich weiterhin als vorteilhaft erwiesen, wenn das Schwingungszeitsignal unter definierten Messbedingungen zur Vergleichbarkeit des erfassten Schwingungszeitsignals mit unter Referenzbedingungen erfassten Schwingungszeitsignalen erfasst wird. Auf diese Weise können von vorneherein in diesem Frequenzbereich auftretende Störeinflüsse, beispielsweise für die Linearführung typische Artefakte und dergleichen eliminiert werden. Derartige Störeinflüsse können beispielsweise in dem Schwellwert berücksichtigt werden. Dieser kann im einfachsten Fall eine über den Frequenzbereich gemittelte Größe darstellen oder aus einem Satz frequenzabhängiger Größen gebildet sein. Nach dem erfinderischen Gedanken werden definierte Messbedingungen erzielt, indem die Schwingungszeitsignale während zumindest einer Messfahrt des Wagens bei bekannter Geschwindigkeit und bekannter Last erfasst werden.

Dabei ist eine konstante Einhaltung der Geschwindigkeit über den Weg des Wagens entlang der Profilschiene bevorzugt vorgesehen, sich ändernde Geschwindigkeiten können jedoch ebenfalls zur Erzielung spezieller Messeffekte angewendet werden, wobei das Geschwindigkeitsprofil reproduzierbar vorgegeben ist und die daraus ermittelten Effektivwerte Kennwerte liefern, die mit Schwellwerten verglichen werden, die unter Zugrundelegung derselben Geschwindigkeitsprofile festgelegt werden. Eine Messfahrt des Wagens kann dabei innerhalb einer kurzen Zeitspanne, beispielsweise zwischen zwei Arbeitsgängen der in einer Werkzeugmaschine integrierten Linearführung, durchgeführt werden, die beispielsweise kleiner 3 Sekunden beträgt und vorzugsweise im Bereich einer Sekunde liegt.

Die Anordnung der Sensoreinrichtung beziehungsweise des Sensors der Sensoreinrichtung, beispielsweise ein piezoelektrischer Sensor, erfolgt bevorzugterweise in dem gegen die Profilschiene verlagerbaren Wagen. Die Sensoreinrichtung kann eine nötige Auswerteeinheit und Mittel zur Alarmgebung bereits enthalten oder entsprechende Rohdaten, teil- oder vollaufbereitete Daten beispielsweise über ein Verbindungskabel oder drahtlos auf eine stationär angeordnete Auswerteeinheit übertragen. Bezogen auf die Bewegungsebene des Wagens und dessen transversaler Bewegung wird der Sensor mit seiner Messachse oder geometrischen Achse bevorzugt normal, das heißt im Wesentlichen senkrecht zu dieser angeordnet. Alternativ kann der Sensor bezüglich dieser Achsen quer oder parallel zur transversalen Bewegung außerhalb oder in der Bewegungsebene untergebracht wie befestigt sein.

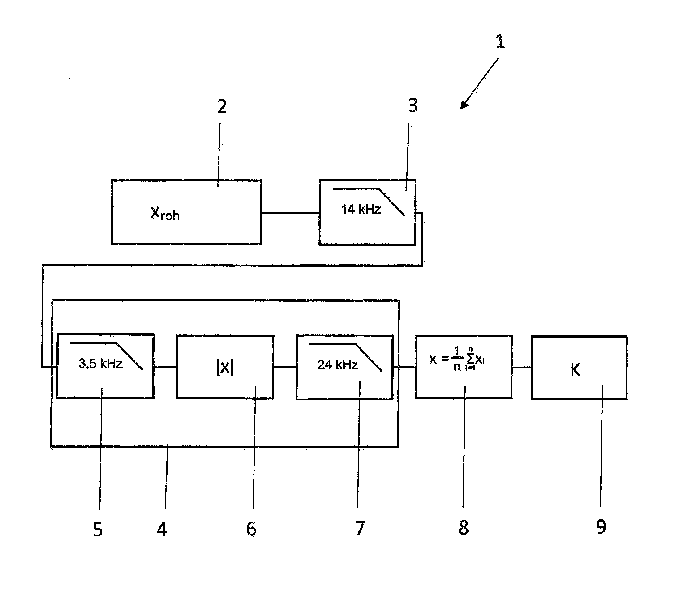

## Kurze Beschreibung der Zeichnung

Die Erfindung wird anhand des in der einzigen Figur dargestellten Ausführungsbeispiels näher erläutert. Dieses zeigt ein Blockschaltbild eines Verfahrens zur Ermittlung eines einen Schädigungszustand eines Wälzkontakts einer Linearführung anzeigenden Kennwerts.

## Ausführliche Beschreibung der Zeichnungen

Die einzige Figur zeigt das Blockschaltbild 1 zur Durchführung eines Verfahrens zur Überprüfung des Schädigungszustands eines Wälzkontakts einer Linearführung zwischen Wälzkörpern und den zugehörigen Laufbahnen dieser. In Block 2 werden über einen Zeitraum einer Messfahrt des Wagens die Schwingungszeitsignale $X_{roh}$ der Sensoreinrichtung, beispielsweise die Messsignale eines piezoelektrischen Sensors, der senkrecht zur Bewegungsebene des Wagen angeordnet ist, in eine Datenerfassungseinrichtung, beispielsweise einen in einem Mikroprozessor vorhandenen oder diesem zugeordneten flüchtigen oder nicht flüchtigen Speicher eingelesen. Die vorzugsweise aus dem Sensor als analoge, den auftretenden Schwingungen während der Messfahrt zugeordnete Daten werden dabei zuvor beispielsweise mittels eines A/D-Wandlers digitalisiert. In Block 3 werden die digitalisierten Daten mittels einer Filtereinheit tiefpassgefiltert, indem beispielsweise Frequenzen über 14 kHz abgeschnitten werden. Eine entsprechende digital arbeitende Filtereinheit in Form eines Tiefpassfilters kann beispielsweise ein Bessel-Filter fünfter Ordnung, ein Butterworth-Filter oder dergleichen sein. Alternativ können die analogen Daten mittels eines diskret aus Hardwarebausteinen aufgebauten Tiefpassfilters gefiltert werden. Hierbei können die Daten analog weiterverarbeitet oder an dieser Stelle digitalisiert werden.

Die in dem Block 4 zusammengefassten Blöcke 5, 6, 7 bilden die Hüllkurvendemodulation. Dabei ist der Absolutwertbildung in Block 6 in Block 5 ein Tiefpassfilter vorgeschaltet, das beispielsweise als Besselfilter fünften Grades ausgebildet ist und eine Grenzfrequenz von 3,5 kHz aufweist. Die in Block 6 folgende Absolutwertbildung |x| bildet jeweils den Absolutwert der in den Blöcken 3 und 5 gefilterten Schwingungszeitsignale $X_{roh}$, die in Block 7 bei einer Frequenz von 24 kHz abschließend tiefpassgefiltert werden. Zur Eliminierung von noch vorhandenen Fremdschwingungen, die im Frequenzbereich der zu erfassenden Schwingungszeitsignale zur Ermittlung einer Schädigung des Wälzkontakts liegen und damit nicht ausgefiltert werden können, wird in Block 8 eine Ermittlung des Gleichspannungsanteils durchgeführt, so dass einzelne Spitzensignale der Fremdschwingungen gedämpft werden. Der Gleichanteil wird anhand des Zusammenhangs

$$x = \frac{1}{n} \sum_{i=1}^{n} x_i$$

ermittelt. Die Gleichanteile können als diskret über eine Erfassungsrate ermittelte Größen x zur Verfügung stehen oder als Integral über Zeit einer Messfahrt dargestellt werden und in Block 9 als Kennwert K abgebildet werden, der beispielsweise auf eine Referenzgröße normiert oder in anderer Weise bearbeitet wird und einer Größe für das verwendete Frequenzband entspricht. Beobachtungen haben gezeigt, dass der Kennwert K mit zunehmender Schädigung des Wälzkontakts ansteigt, so dass in Block 9 oder einem nachfolgenden Block ein Vergleich mit einem Schwellwert erfolgen kann, der eine noch ausreichende Qualität des Zustands des Wälzkontakts markiert. Übersteigt der Kennwert den Schwellwert werden in derselben Routine oder in einer weiteren Routine Maßnahmen zur Alarmierung des Bedien- oder Wartungspersonals, beispielsweise ein akustisches und/oder optisches Warnsignal abgegeben, eine Leitwarte informiert oder dergleichen eingeleitet.

**Patentansprüche**

1. Verfahren zur Überwachung einer Linearführung mit einem auf einem aus auf Laufbahnen abwälzenden Wälzkörpern gebildeten Wälzkontakt entlang einer Schiene verlagerbaren Wagen mit einer Sensoreinrichtung zur Erfassung eines Schädigungszustands des Wälzkontakts, **dadurch gekennzeichnet, dass** mittels der Sensoreinrichtung ein Schwingungszeitsignal erfasst wird, aus dem Schwingungszeitsignal eine Hüllkurvendemodulation des Schwingungszeitsignals durchgeführt und eine daraus resultierende Größe nach einer Gleichanteilsbestimmung als mit dem Schädigungszustand ansteigender Kennwert ermittelt wird und bei einem Überschreiten des Kennwerts über einen vorgegebenen Schwellwert ein Schädigungszustand erkannt wird.

2. Verfahren nach Anspruch 1, **dadurch gekennzeichnet, dass** vor der Hüllkurvendemodulation mittels eines Tiefpassfilters eine Bandbreite des Schwingungszeitsignals auf 16 kHz, vorzugsweise 14 kHz begrenzt wird.

3. Verfahren nach Anspruch 1 oder 2, **dadurch gekennzeichnet, dass** die Hüllkurvenmodulation mittels einer Absolutwertbildung, der jeweils ein Tiefpassfilter vor- und nachgeschaltet wird, erfolgt.

4. Verfahren nach Anspruch 3, **dadurch gekennzeichnet, dass** das vorgeschaltete Tiefpassfilter eine Grenzfrequenz kleiner 5 kHz, vorzugsweise 3,5 kHz aufweist.

5. Verfahren nach einem der Ansprüche 3 oder 4, **dadurch gekennzeichnet, dass** mittels des nachgeschalteten Tiefpassfilters Frequenzen grö-βer 24 kHz im Wesentlichen eliminiert werden.

6. Verfahren nach einem der Ansprüche 1 bis 5, **dadurch gekennzeichnet, dass** die Schwingungszeitsignale während zumindest einer Messfahrt des Wagens bei bekannter Geschwindigkeit und bekannter Last erfasst werden.

7. Verfahren nach Anspruch 6, **dadurch gekennzeichnet, dass** die Messfahrt innerhalb 3 Sekunden, vorzugsweise im Bereich einer Sekunde durchgeführt wird.

8. Verfahren nach einem der Ansprüche 1 bis 7, **dadurch gekennzeichnet, dass** die Sensoreinrichtung bezüglich einer Bewegungsebene des Wagens normal auf dem Wagen befestigt ist.

9. Verfahren nach einem der Ansprüche 1 bis 7, **dadurch gekennzeichnet, dass** die Sensoreinrichtung bezüglich einer Bewegungsebene parallel und quer zur Bewegungsrichtung angeordnet ist.

**10.** Verfahren nach einem der Ansprüche 1 bis 9, **dadurch gekennzeichnet, dass** die Sensoreinrichtung einen piezoelektrischen Sensor oder einen mittels Mikrosystemtechnik hergestellten Sensor aufweist.

1

2          3

| $X_{roh}$ | | 14 kHz |

| 3,5 kHz | $|x|$ | 24 kHz | $x = \frac{1}{n}\sum\limits_{i=1}^{n} x_i$ | K |

5      4      6      7      8      9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4140042 A1

- DE 112005002077 T5